# EUROPEAN PATENT SPECIFICATION

(11) **EP 1 321 645 B1**
(45) Date of publication and mention of the grant of the patent: **14.02.2007**
(21) Application number: 01850216.1
(22) Date of filing: 21.12.2001
(51) Int. Cl.: F02B 67/04, F02B 75/20, F02B 63/04, B60K 5/04

(54) **Internal combustion engine**
Brennkraftmaschine
Moteur à combustion interne

(43) Date of publication of application: 25.06.2003
(73) Proprietor: Ford Global Technologies, LLC, Dearborn, MI 48126 (US)
(72) Inventor: Tonnqvist, Andreas, 436 40 Askim (SE); Sällström, Göran, 290 60 Kyrkhult (SE); Zarowiecki, Andrzej, 423 47 Torslanda (SE); Murman, Bengt, 184 63 Äkersberg (SE)
(74) Representative: Hellbom, Lars Olof

(56) References cited:
- EP-A- 1 038 719
- WO-A-91/16530
- CH-A- 170 540
- DE-A- 2 153 773
- DE-A- 19 939 813
- FR-A- 1 211 391
- US-A- 5 873 336
- PATENT ABSTRACTS OF JAPAN vol. 013, no. 593 (M-914), 27 December 1989 (1989-12-27) & JP 01 249922 A (YAMAHA MOTOR CO LTD), 5 October 1989 (1989-10-05)

## Description

Internal combustion engine, comprising an engine block, a crankshaft rotatably journalled in the engine block and a transmission mounted at one side of the engine block, said transmission having an input shaft with an input gear wheel meshing with an output gear wheel driven by the crankshaft and a first output shaft driven by the input shaft for driving at least one auxiliary unit.

Usually in common internal combustion engines auxiliary units such as water pumps, generators, pumps for power steerings and compressors for air conditionings are driven by the crankshaft via pulleys or gear wheels mounted on an end portion of the crankshaft extending outside of the crankcase. The same goes for engine components such as camshafts and fuel pumps which often are driven via a toothed pulley and belt at the front end of the engine block. These auxiliary units and transmission means at the front end of the engine increase the total length of the engine and require space in the engine compartment. Basically this is not a problem in vehicles having longitudinally mounted engines but when it comes to transversally mounted engines available space is more limited and transversally mounted engines having more than four cylinders, e. g. six cylinders, are usually V-engines.

It is known in the art to reduce the space requirements of an in line engine, e. g. a six cylinder in line engine, by arranging a transmission for auxiliary units at one side of the engine. For instance, DE 2 153 773 discloses a six cylinder in line engine having a side mounted transmission with a single output shaft drivingly connected to a fuel injection pump and an air compressor. The generator, however, which normally should be running at a higher rpm than the fuel injection pump and the compressor is driven in a conventional manner by means of a separate pulley and belt transmission in front of the front end of the engine block.

A principal object of the present invention is to achieve an internal combustion engine of the type described by way of introduction which can be designed optimally short, for example a five cylinder in line engine which can be made no longer than a conventional previously known four cylinder in line engine.

More specifically one object of the invention is to achieve an internal combustion engine of the type described by way of introduction which has a compact transmission design and which can drive at least two auxiliary units or engine components requiring different input speeds.

A further object of the invention is to achieve an internal combustion engine with a side mounted transmission which is particularly suitable to enable driving of one auxiliary unit by means of another auxiliary unit, e. g. driving an air conditioning compressor by means of an integrated starter/generator when the engine is not running.

These and further objects are achieved according to the invention by virtue of the fact that the transmission has a second output shaft, said first and second shafts being driven with different speeds of rotation.

In a preferred embodiment of the present invention the second output shaft is hollow and the first output shaft extends through the second output shaft. Preferably the first output shaft is then driven at an rpm higher than the crankshaft rpm by means of a first smaller gear wheel on the first output shaft. Further, the first output shaft is drivingly connected to an integrated starter/generator at one end and an air conditioning compressor at the other end while the second output shaft is driven at an rpm lower than the crankshaft rpm by means of a larger gear wheel on the second output shaft and is drivingly connected to one or two camshafts. By mounting the smaller gear wheel via an engageable and disengageable one-way coupling on the first output shaft the starter/generator can, with the one-way coupling disengaged, drive the compressor when the engine is not running.

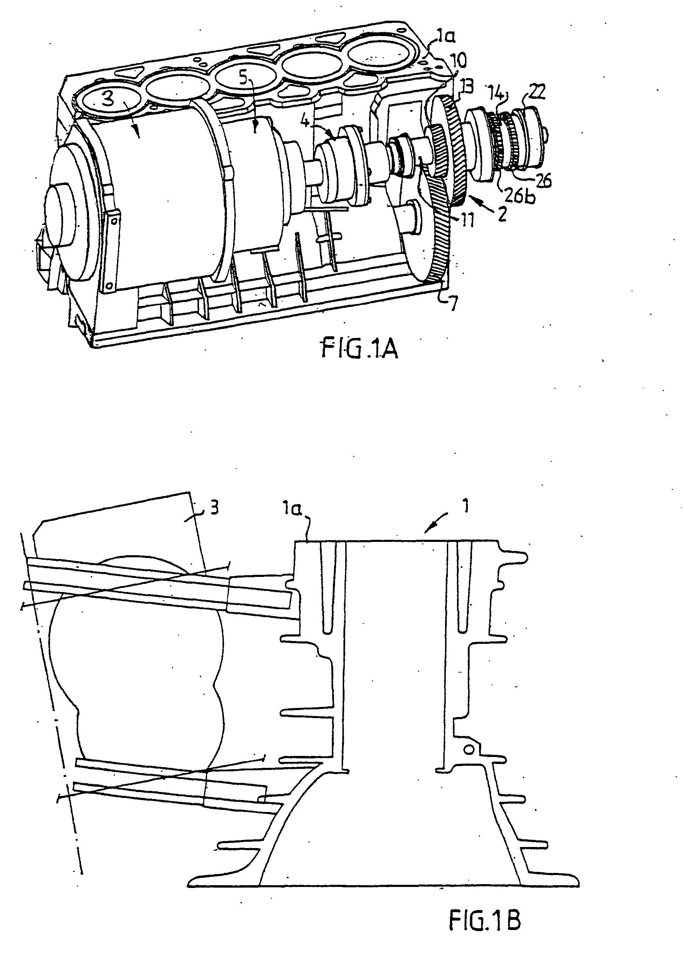

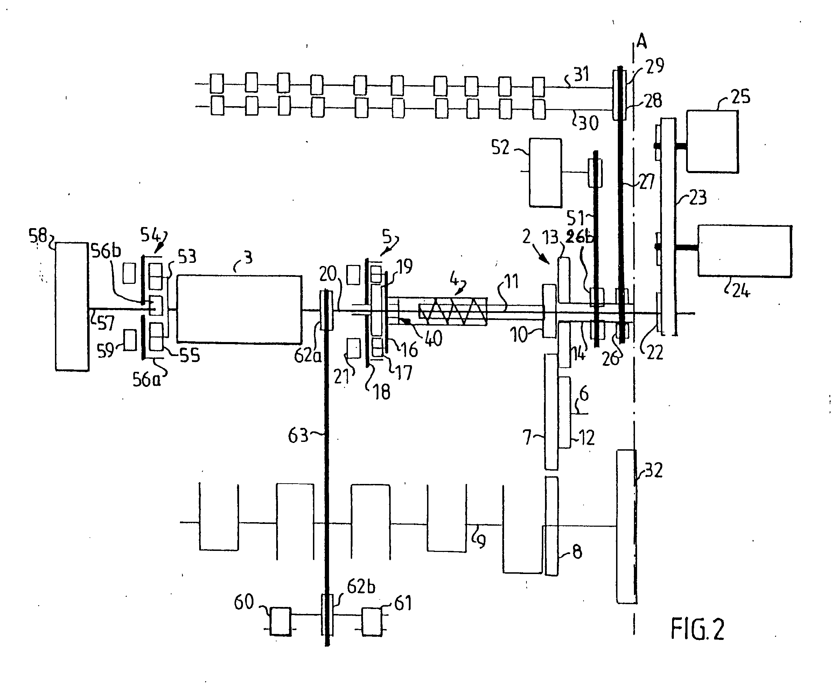

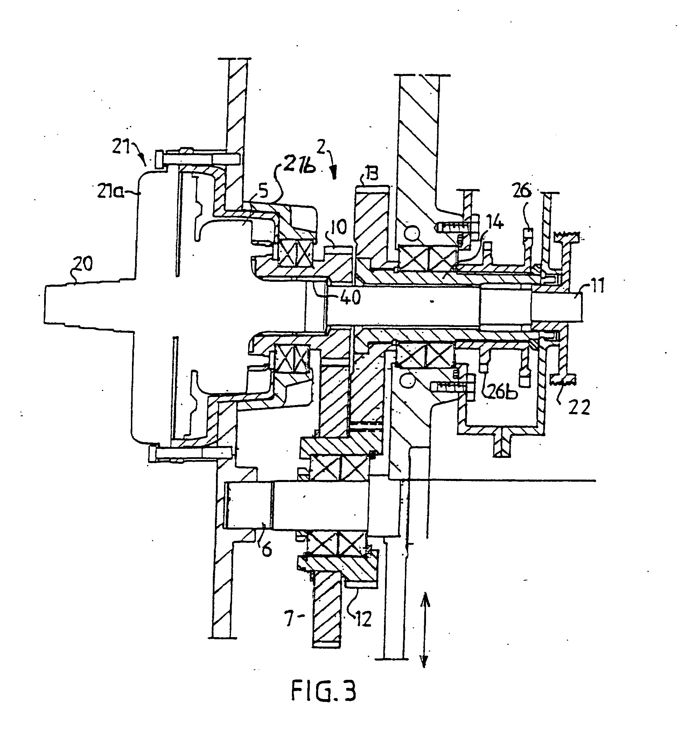

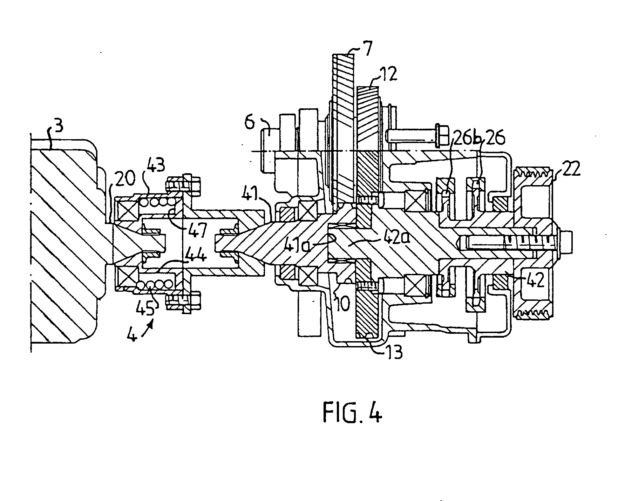

The invention will be described in more detail below with reference to the accompanying drawings, where fig.1a and 1b show a perspective view and a schematic cross-section, respectively, of an engine block with an auxiliary unit and drive transmission according to the invention, fig. 2 shows a scheme of the auxiliary drive transmission in fig. 1a, fig. 3 shows a cross-section of a first embodiment of the transmission according to the invention and fig. 4 shows a cross-section of a second embodiment of the transmission according to the invention.

Figs. 1a and 1b show an engine block 1 of a five cylinder in line engine having a transmission 2 which is drivingly connected to an auxiliary unit in the form of an integrated starter/generator (ISG) 3 through a pulse damping coupling 4 and a gearbox 5, preferably a well known planetary type two speed gearbox. As can be seen in fig. 1a and 1b the ISG 3 is mounted at a high level relative to the engine block 1 so that the upper end portion 3a of the ISG 3 will, for crash safety purposes, be located at a level high above the upper end surface 1a of the engine block 1. Transversally mounted engines are usually mounted leaning slightly rearward towards the passenger compartment. By mounting the ISG 3 rather high the position and the weight of the ISG 3 will assist in a crash sequence to force the power train to rotate downwards during its backward movement, thereby forcing the power train to move under rather than into the passenger compartment.

With reference to fig. 2 the transmission 2 comprises an input shaft 6 on which a first gear wheel 7 is non-rotatably mounted. The gear wheel 7 meshes with an output gear wheel 8 non-rotatably mounted on a crankshaft 9 rotatably journalled in the engine block 1. The gear wheel 7 also meshes with a first output gear wheel 10 journalled on a first output shaft 11 of the transmission 2, the gear wheel 10 having a smaller radius than the gear wheel 8. The gear wheel 7 transmits torque from the crankshaft 9 to the first output shaft 11 via the pulse damping coupling 4 and a one-way clutch 40 (to be described in more detail with reference to Fig. 3) at an rpm higher than the rpm of the crankshaft. A second gear wheel 12 having a smaller radius than the gear wheel 7 is non-rotatably mounted on the input shaft 6 and meshes with a second output gear wheel 13 non-rotatably mounted on a second hollow output shaft 14 rotatably journalled on the outside of and concentrically with the first output shaft 11. This second output gear has a larger radius than the gear wheel 12. Due to the difference in gear ratio between the pairs of gears wheels 7, 10 and 12, 13, respectively, the first output shaft 11 will rotate with a higher rpm than the second output shaft 14.

As shown in fig. 2 the gear wheel 10 is non-rotatably connected to an input side of the pulse damping coupling 4 which will be described in more detail with reference to fig. 4. The output side of the pulse damping coupling 4 in turn is non-rotatably connected to a planet carrier 16 with planet gears 17 meshing with a ring gear 18 and a sun gear 19 non-rotatably attached to an end of an output/input shaft 20 of the ISG 3. By means of a clutch 21 which can be an electromagnetic one the ring gear 18 can be locked to the clutch housing 21a or released as will be described with reference to fig. 3. A pulley 22 is non-rotatably attached to an opposite end portion of the first output shaft 11. Via the pulley 22 and a belt 23 the first output shaft 11 drives an air conditioning compressor 24 and a water pump 25..

The output/input shaft 20 runs through the ISG 3 and carries, on the side opposite the planetary gearbox 5, non-rotatably a planet carrier 53 of a second planetary gearbox 54, the planet gears 55 of which mesh with a ring gear 56a and a sun gear 56b, which is non-rotatably attached to an input shaft 57 of a compressor (super charger) 58. By means of this arrangement the ISG 3 can be used to drive the compressor 58 at low engine rpm to boost intake air pressure. The ISG 3 is drivingly connected to and disconnected from the compressor by means of an electromagnetic clutch 59. The arrangement shown in Fig. 2 also includes an engine oil pump 60 and an engine transmission oil pump 61 which are mounted on the outside of the engine block and are drivingly connected to the output/input shaft 20 via pulleys 61, 62 and a belt 63.

On the second output shaft 14 two chain sprockets 26 and 26b are non-rotatably mounted. Via the chain sprocket 26, a chain 27 and two additional chain sprockets 28 and 29 the second output shaft 14 drives two camshafts 30, 31. Via a pulley 50 the second output shaft drives a fuel injection pump 52. As can be seen in fig. 2 the chain transmission 26-29 is located in the same plane A-A of the engine block 1 as a fly wheel 32 mounted on the crankshaft 9. The flywheel 32 is mounted at that end of the the engine block against which the engine clutch and transmission (not shown) is intended to be mounted. This means that the pulley 22, the belt 23, the compressor 24 and the water pump 25 will be situated outside the end plane A-A of the engine block 1 but above the gearbox so that these auxiliary units will add no extra length to the total length of the engine including the engine clutch and transmission.

The transmission 2 described above and shown schematically in fig. 2 is shown in more detail in fig. 3 where elements common with elements in fig. 2 have the same reference numerals as in fig. 2.. The first output shaft 11 of the transmission 2 and the output shaft 20 from the ISG are joined so as to rotate together with the same speed. Preferably a pulse damping coupling (not shown) corresponding with the pulse damping coupling 4 shown in fig. 2 and fig. 4 is arranged in the drive line between the ISG 3 and the clutch 21. The output shaft 11 is journalled in the gear wheel 10 which in turn is journalled in a gear casing 21b. Via the above mentioned one-way clutch 40 the gear wheel 10 can be connected to the output shaft 11. When starting the engine by running the ISG 3 as a motor the ring gear 18 will be locked by the clutch 21 to the clutch housing 21a. The sun gear 19 will then drive the planet carrier 16 and with it the gear wheel 10 at a lower speed than the input speed of the shaft 11/20 to increase torque during starting.. Thus, the one-way clutch 40 is arranged such that it will be free wheeling when the gear wheel 10 is running with a lower rpm than the shaft 11 . A typical ratio between the input speed to and the output speed from the planetary gearing, i. e. the speed of the shaft 11/20 vs. the speed of the planet carrier 16, might be 3:1

After the engine has started the motor mode of the ISG can be switched to generator mode at which time the ring gear 18 will be released by disengaging the friction clutch 21. As soon as the rpm of the gear wheel 10 exceeds the speed of the shaft 11 the one-way clutch will lock the gear wheel 10 to the shaft 11, thereby transmitting torque from the engine to the ISG which is now running as a generator.

The described planetary gearing and one-way clutch arrangement allows the air conditioning compressor 24 to be driven by the ISG when the engine of the vehicle is turned off since, when the gear wheel 10 is stationary and the shaft 11 is driven by the ISG, the one-way clutch will be free-wheeling, thereby allowing the shaft 11 to rotate in relation to the gear wheel 10 in order to drive the compressor 24.

Other means instead of a friction clutch 21, a planetary gearing 5 and a one-way clutch 40 could be used in order to achieve the above described function, i.e. a speed reduction when running the ISG as a starter, a direct drive when driving the ISG as a generator from the engine of the vehicle and, finally, the possibility to disengage the output gear wheel 10 from the shaft 1 1to drive an auxiliary unit such as an air conditioning compressor directly from the ISG when the engine is not running. The planetary type gearbox could be replaced with a regular two-speed gearbox having a direct drive and a pair of low speed gear wheels, one if which is engageable and disengageable. The one-way clutch could be replaced with another type of engageable and disengageable clutch.

Fig. 4 shows an embodiment of the invention which is slightly modified in comparision with the one shown in fig. 3. Like the transmission 2 in fig. 3 the transmission 2 in fig. 4 has two output shafts with a common axis of rotation, namely a first output shaft 41 and a second output shaft 42. As can be seen the shafts 41 and 42 are journalled end to end instead of one inside the other like the first and second output shafts of the transmission shown in fig. 3. In particular the first shaft 41 is formed with a bore 41a receiving a stub portion 42a of the second shaft 42. The first output shaft 41 is connected to the shaft 20 of the ISG by means of a pulse damping coupling 4 which comprises an outer cup like member 43 and an inner cup like member 44. In a space formed between the members 43 and 44 a coil spring 45 is disposed, which has one end attached to the outer member 43 and the other end attached to a flange 47 on the inner member 44. The spring 45 is arranged such that, in a direction of rotation of the coupling 4 which results in a contraction of the spring 45, some relative movement between the member 43 and 44 will be allowed. Rotation in the opposite direction will result in an expansion of the spring 45 which will tend to prevent relative movement between the members 43 and 44 when the coils of the spring are biassed against the inner surface of the outer cup like member 43.

A major difference between the arrangement shown in fig. 3 and the one shown in fig. 4 is that the pulley 22 for the air conditioning compressor belt 23 is non-rotatably mounted on the second output shaft 14. This arrangement will not allow driving of the compressor from an ISG when the engine of the vehicle is not running and, therefore, it is suitable for an installation having a generator instead of an ISG.

## Claims

1. Internal combustion engine, comprising an engine block (1), a crankshaft (9) rotatably journalled in the engine block and a transmission (2) mounted at one side of the engine block, said transmission having an input shaft (6) with an input gear wheel (7) meshing with an output gear wheel (8) driven by the crankshaft and a first output shaft (11;41) driven by the input shaft for driving at least one auxiliary unit (3), **characterized in that** the transmission (2) has a second output shaft (14;42), said first and second output shafts being driven with different speeds of rotation from the input shaft.

2. Internal combustion engine according to claim 1, **characterized in that** a first and a second gear wheel (7,12) on the input shaft (6) meshes with a first and a second output gear wheel (10,13) on the first and the second output shafts (11;41, 14;42), respectively.

3. Internal combustion engine according to claim 1 or 2, **characterized in that** the first and second output shafts (11;41, 14;42) have a common axis of rotation

4. Internal combustion engine according to claim 3, **characterized in that** the second output shaft (14) is hollow and that the first output shaft (11) extends through the second output shaft and has output means (5,22) at opposite end portions extending outside the second shaft.

5. Internal combustion engine according to claim 4, **characterized in that** the output means (5,22) at said end portions of the first output shaft (11) are drivingly connected to at least a first and a second auxiliary unit (3,24) while the second output shaft has output means (26) drivingly connected to at least one camshaft (30,31).

6. Internal combustion engine according to claim 3, **characterized in that** the first and the second output shafts (41,42) have end portions facing one another, one of said end portions having an axial bore (41a) and the other one an axle stub (42a) which is joumalled in the bore, the output shafts having end portions facing away from one another, each one provided with output means (4,22) for driving an auxiliary unit.

7. Internal combustion engine according to claim 6, **characterized in that** at least one of said first and second output shafts (41,42) is provided with output means (26) drivingly connected to at least one camshaft.

8. Internal combustion engine according to one of claims 1-7, **characterized in that** at least one output shaft (11;41, 14;42) is connected to at least one auxiliary unit (3) via a pulse damping coupling (4).

9. Internal combustion engine according to one of claims 1-8, **characterized in that** at least one of the auxiliary units (3) is an electrical machine.

10. Internal combustion engine according to claim 9, **characterized in that** the electrical machine (3) is an integrated starter/generator which is drivingly connected to one (11) of said first and second output shafts via an engageable and disengageable one-way coupling (40).

11. Internal combustion engine according to claim 10, **characterized in that** the electrical machine (3) is drivingly connected to one (11) of said first and second output shafts via a two-speed gearbox (5).

12. Internal combustion engine according to claim 10 or 11, **characterized in that** the one (11) of said first and second output shafts, which is connected to the electrical machine (3), is also drivingly connected to an air conditioning compressor (24).

13. Internal combustion engine according to claim 10 or 11, **characterized in that** the one (11) of said first and second output shafts, which is connected to the electrical machine (3), is also drivingly connected to a super charger (58) via an engageable and disengageable coupling (59).

14. Internal combustion engine according to claim 10 or 11, **characterized in that** the one (11) of said first and second output shafts, which is connected to the electrical machine (3), is also connected to oil pump means (60, 61).

15. Internal combustion engine according to one of claims 1-12, **characterized in that** the transmission (2) is arranged at one side of the engine block (1) so that at least a first auxiliary unit (3) is located beside the engine block while at least a second auxiliary unit (24) extends above and past that end plane of the engine block (1) against which the engine gearbox is intended to be mounted.

16. Internal combustion engine according to claim 13, **characterized in that** said first auxiliary unit (3) is an integrated starter/generator which is arranged relative to the engine block (1) so that an upper portion thereof extends above the upper end plane (1a) of the engine block (1).

17. Internal combustion engine according to one of claims 1-14, **characterized in that** one (11) of said first and second output shafts is driven with an increased speed of rotation and the other one (14) with a reduced speed of rotation in relation to the speed of rotation of the crankshaft.

## Patentansprüche

1. Brennkraftmaschine mit einem Motorblock (1), einer Kurbelwelle (9), die drehbar in dem Motorblock gelagert ist, und einem Antrieb (2), der auf einer Seite des Motorblockes montiert ist, wobei der Antrieb eine Antriebswelle (6) mit einem Antriebszahnrad (7) besitzt, das in ein Abtriebszahnrad (8) eingreift, das von der Kurbelwelle angetrieben wird, und eine erste Abtriebswelle (11; 41), die von der Antriebswelle angetrieben wird, um mindestens ein Hilfs- bzw. Zusatzaggregat (3) anzutreiben, **dadurch gekennzeichnet, dass** der Antrieb (2) eine zweite Abtriebswelle (14; 42) besitzt, wobei die erste und die zweite Abtriebswelle mit unterschiedlicher Drehzahl durch die Antriebswelle angetrieben werden.

2. Brennkraftmaschine nach Anspruch 1, **dadurch gekennzeichnet, dass** ein erstes und ein zweites Zahnrad (7, 12) an der Antriebswelle (6) in ein erstes und ein zweites Abtriebszahnrad (10, 13) an der ersten bzw. an der zweiten Abtriebswelle (11; 41, 14; 42) eingreift.

3. Brennkraftmaschine nach Anspruch 1 oder 2, **dadurch gekennzeichnet, dass** die erste und die zweite Abtriebswelle (11; 41, 14; 42) eine gemeinsame Drehachse besitzen.

4. Brennkraftmaschine nach Anspruch 3, **dadurch gekennzeichnet, dass** die zweite Abtriebswelle (14) hohl ist, und dass die erste Abtriebswelle (11) durch die zweite Abtriebswelle verläuft und an den jeweils gegenüberliegenden Enden Abtriebselemente (5, 22) besitzt, die außerhalb der zweiten Welle verlaufen.

5. Brennkraftmaschine nach Anspruch 4, **dadurch gekennzeichnet, dass** die Abtriebselemente (5, 22) an den Enden der ersten Abtriebswelle (11) mit mindestens einem ersten und einem zweiten Hilfs- bzw. Zusatzaggregat (3, 24) antriebsmäßig verbunden sind, während die zweite Abtriebswelle Abtriebselemente (26) besitzt, die mit mindestens einer Nockenwelle (30, 31) antriebsmäßig verbunden sind.

6. Brennkraftmaschine nach Anspruch 3, **dadurch gekennzeichnet, dass** die erste und die zweite Abtriebswelle (41, 42) Enden besitzt, die einander zugewandt sind, wobei eines der Enden eine axiale Bohrung (41 a) besitzt und das andere Ende einen Achszapfen (42a) besitzt, der in der Bohrung gelagert ist, und die Abtriebswellen Enden besitzen, die voneinander abgewandt sind, und jedes Ende Abtriebselemente (4, 22) zum Antrieb eines Hilfs- bzw. Zusatzaggregates besitzt.

7. Brennkraftmaschine nach Anspruch 6, **dadurch gekennzeichnet, dass** mindestens die erste oder die zweite Abtriebswelle (41, 42) mit Abtriebselementen (26) versehen ist, die mit mindestens einer Nockenwelle antriebsmäßig verbunden sind.

8. Brennkraftmaschine nach einem der Ansprüche 1 bis 7, **dadurch gekennzeichnet, dass** mindestens eine Abtriebswelle (11; 41, 14; 42) über eine impulsdämpfende Kupplung (4) mit mindestens einem Hilfs- bzw. Zusatzaggregat (3) verbunden ist.

9. Brennkraftmaschine nach einem der Ansprüche 1 bis 8, **dadurch gekennzeichnet, dass** es sich bei mindestens einem der Hilfs- bzw. Zusatzaggregate (3) um eine elektrische Maschine handelt.

10. Brennkraftmaschine nach Anspruch 9, **dadurch gekennzeichnet, dass** es sich bei der elektrischen Maschine (3) um einen integrierten Starter/Generator handelt, der über eine einrückbare und ausrückbare Einwegkupplung (40) mit der ersten oder der zweiten Abtriebswelle (11) antriebsmäßig verbunden ist.

11. Brennkraftmaschine nach Anspruch 10, **dadurch gekennzeichnet, dass** die elektrische Maschine (3) über ein 2-Gang-Getriebe (5) mit der ersten oder der zweiten Abtriebswelle (11) antriebsmäßig verbunden ist.

12. Brennkraftmaschine nach Anspruch 10 oder 11, **dadurch gekennzeichnet, dass** die erste oder die zweite Abtriebswelle (11), die mit der elektrischen Maschine (3) verbunden ist, auch mit einem Kompressor für die Klimaanlage (24) antriebsmäßig verbunden ist.

13. Brennkraftmaschine nach Anspruch 10 oder 11, **dadurch gekennzeichnet, dass** die erste oder die zweite Abtriebswelle (11), die mit der elektrischen Maschine (3) verbunden ist, über eine einrückbare und ausrückbare Kupplung (59) auch mit einem Verdichter (58) antriebsmäßig verbunden ist.

14. Brennkraftmaschine nach Anspruch 10 oder 11, **dadurch gekennzeichnet, dass** die erste oder die zweite Abtriebswelle (11), die mit der elektrischen Maschine (3) verbunden ist, auch mit Ölpumpvorrichtungen (60, 61) verbunden ist.

15. Brennkraftmaschine nach einem der Ansprüche 1 bis 12, **dadurch gekennzeichnet, dass** der Antrieb (2) an einer Seite des Motorblockes (1) angeordnet ist, so dass sich mindestens ein erstes Hilfs- bzw. Zusatzaggregat (3) neben dem Motorblock befindet, während sich mindestens ein zweites Hilfs- bzw. Zusatzaggregat (24) über dieses Ende des Motorblockes (1), an dem das Motorgetriebe montiert werden soll, hinaus erstreckt.

16. Brennkraftmaschine nach Anspruch 13, **dadurch gekennzeichnet, dass** es sich bei dem ersten Hilfs- bzw. Zusatzaggregat (3) um einen integrierten Starter/Generator handelt, der so in Bezug auf den Motorblock (1) angeordnet wird, dass sein oberer Abschnitt über das obere Ende (1 a) des Motorblockes (1) hinausragt.

17. Brennkraftmaschine nach einem der Ansprüche 1 bis 14, **dadurch gekennzeichnet, dass** die erste oder die zweite Abtriebswelle (11) im Verhältnis zu der Drehzahl der Kurbelwelle mit höherer Drehzahl und die andere Abtriebswelle (14) mit niedrigerer Drehzahl angetrieben wird.

## Revendications

1. Un moteur à combustion interne, comportant un bloc moteur (1), un vilebrequin (9) rotativement inséré dans le bloc moteur et une transmission (2) montée sur un côté du bloc moteur, ladite transmission ayant un arbre d'entrée (6) avec une roue dentée d'entrée (7) s'engrenant avec une roue dentée de sortie (8) entraînée par le vilebrequin et un premier arbre de sortie (11;41) entraîné par l'arbre d'entrée pour entraîner au moins un organe auxiliaire (3), **caractérisé en ce que** la transmission (2) présente un deuxième arbre de sortie (14;42), lesdits premier et deuxième arbres de sortie étant entraînés avec des vitesses de rotation différentes à partir de l'arbre d'entrée.

2. Un moteur à combustion interne selon la revendication 1, **caractérisé en ce qu'**une première et une deuxième roue dentée (7, 12) sur l'arbre d'entrée (6) s'engrène avec une première et une deuxième roue dentée de sortie (10, 13) sur le premier et le deuxième arbre de sortie (11;41, 11;42) respectivement.

3. Un moteur à combustion interne selon la revendication 1 ou 2, **caractérisé en ce que** les premier et deuxième arbres de sortie (11;41, 11;42) ont un axe de rotation commun.

4. Un moteur à combustion interne selon la revendication 3, **caractérisé en ce que** le deuxième arbre de sortie (14) est creux et **en ce que** le premier arbre de sortie (11) se prolonge à travers le deuxième arbre de sortie et présente des moyens de sortie (5, 22) aux portions d'extrémités opposées se prolongeant à l'extérieur du deuxième arbre de sortie.

5. Un moteur à combustion interne selon la revendication 4 **caractérisé en ce que** les moyens de sortie (5, 22) aux dites portions d'extrémités du premier arbre de sortie (11) sont raccordés par entraînement à au moins un premier et un deuxième organe auxiliaire (3, 24) tandis que le deuxième arbre de sortie présente un moyen de sortie (26) raccordé par entraînement à au moins un arbre à cames (30, 31).

6. Un moteur à combustion interne selon la revendication 3, **caractérisé en ce que** le premier et le deuxième arbre de sortie (41, 42) ont des portions d'extrémités donnant l'une sur l'autre, l'une desdites portions ayant un alésage axial (41a) et l'autre une fusée (42a) laquelle est insérée dans l'alésage, les arbres de sortie ayant des portions d'extrémité orientées l'une à l'opposé de l'autre, chacune pourvue de moyens de sortie (4, 22) pour entraîner un organe auxiliaire.

7. Un moteur à combustion interne selon la revendication 6, **caractérisé en ce qu'**au moins un desdits premier et deuxième arbres de sortie (41, 42) est pourvu d'un moyen de sortie (26) raccordé par entraînement à au moins un arbre à cames.

8. Un moteur à combustion interne selon l'une quelconque des revendications 1-7, **caractérisé en ce qu'**au moins un arbre de sortie (11;41, 14;42) est raccordé à au moins un organe auxiliaire (3) par un accouplement amortisseur d'impulsions (4).

9. Un moteur à combustion interne selon l'une quelconque des revendications 1-8, **caractérisé en ce qu'**au moins l'un des organes auxiliaires (3) est une machine électrique.

10. Un moteur à combustion interne selon la revendication 9, **caractérisé en ce que** la machine électrique (3) est un démarreur/générateur intégré lequel est raccordé par entraînement à l'un (11) desdits premier et deuxième arbres de sortie par un accouplement embrayable et débrayable unidirectionnel (40).

11. Un moteur à combustion interne selon la revendication 10, **caractérisé en ce que** la machine électrique (3) est raccordée par entraînement à l'un (11) desdits premier et deuxième arbres de sortie par une boîte de vitesses à deux rapports (5).

12. Un moteur à combustion interne selon la revendication 10 ou 11, **caractérisé en ce que** l'un (11) desdits premier et deuxième arbres de sortie, lequel est raccordé à la machine électrique (3), est également raccordé par entraînement à un compresseur de climatisation (24).

13. Un moteur à combustion interne selon la revendication 10 ou 11, **caractérisé en ce que** l'un (11) desdits premier et deuxième arbres de sortie, lequel est raccordé à la machine électrique (3), est également raccordé par entraînement à un compresseur volumétrique (58) par un accouplement embrayable et débrayable (59).

14. Un moteur à combustion interne selon la revendication 10 ou 11, **caractérisé en ce que** l'un (11) desdits premier et deuxième arbres de sortie, lequel est raccordé à la machine électrique (3), est également raccordé aux moyens de pompe à huile (60, 61).

15. Un moteur à combustion interne selon l'une quelconque des revendications 1-12, **caractérisé en ce que** la transmission (2) est agencée sur un côté du bloc moteur (1) de sorte qu'au moins un premier organe auxiliaire (3) soit situé à côté du bloc moteur tandis qu'au moins un deuxième organe auxiliaire (24) se prolonge au-dessus et au-delà de ce plan d'extrémité du bloc moteur (1) contre lequel la boîte de vitesses du moteur est prévue pour être montée.

16. Un moteur à combustion interne selon la revendication 13, **caractérisé en ce que** ledit premier organe auxiliaire (3) est un démarreur/générateur intégré qui est agencé par rapport au bloc moteur (1) de sorte qu'une portion supérieure de celui-ci se prolonge au-dessus du plan d'extrémité supérieure (1a) du bloc moteur (1).

17. Un moteur à combustion interne selon l'une quelconque des revendications 1-14, **caractérisé en ce que** l'un (11) desdits premier et deuxième arbres de sortie est entraîné avec une vitesse de rotation accrue et l'autre (14) avec une vitesse de rotation réduite par rapport à la vitesse de rotation du vilebrequin.
